# FASCICULE DE BREVET EUROPEEN

(11) **EP 1 006 308 B1**
(45) Date de publication et mention de la délivrance du brevet: **31.07.2002**
(21) Numéro de dépôt: 99420235.6
(22) Date de dépôt: 02.12.1999
(51) Int. Cl.: F16L 37/42, F16L 37/23, F16L 37/22

(54) **Raccord rapide de sécurité pour la jonction amovible de canalisations**
Sicherheitsschnellkupplung für die lösbare Verbindung von Rohrleitungen
Quick acting safety coupling for the disconnectable connection of pipe lines

(30) Priorité: 03.12.1998 FR 9815455
(43) Date de publication de la demande: 07.06.2000
(73) Titulaire: STÄUBLI FAVERGES, 74210 Faverges (FR)
(72) Inventeur: Lacroix, Jean-Jaques, 74330 Lovagny (FR); Chambaud, Antoine, 74210 Giez (FR)
(74) Mandataire: Myon, Gérard Jean-Pierre

(56) Documents cités:
- WO-A-94/09304
- WO-A-97/15779

## Description

L'invention a trait à un raccord rapide de sécurité pour la jonction amovible de canalisations et, plus spécifiquement, à un raccord rapide dit "à double détente".

On connaît, par la demande de brevet européen 0 722 063, un raccord rapide à double détente dans lequel sont utilisées deux bagues pourvues de griffes élastiques aptes à coopérer successivement avec une gorge externe d'un embout mâle pour libérer cet embout en deux étapes, en permettant la décharge du fluide contenu dans la canalisation aval, ce qui évite les mouvements de fouet qui pourraient s'avérer dangereux pour un utilisateur avec un raccord à simple détente. D'autres raccords à double détente sont connus, par exemple, de US-A-5,290,009, WO-A-94/09304 ou de DE-A-27 41 512.

Dans ces dispositifs connus, une bague ou fourreau externe est utilisée pour commander, d'une part, des moyens de verrouillage de l'embout mâle dans l'élément femelle dans une position de mise en communication des canalisations, et, d'autre part, des organes de retenue de l'embout en position intermédiaire de vidange ou de décharge de la canalisation aval. Dans cette position de décharge, le fluide qui s'écoule à partir de l'embout mâle remplit le volume intérieur du fourreau, ce qui a pour effet de faire augmenter la pression régnant dans une chambre annulaire définie autour du corps de l'élément femelle et à l'intérieur de ce fourreau. Cette augmentation de pression peut, dans certaines configurations au moins, induire un déplacement du fourreau correspondant à une augmentation du volume de cette chambre, c'est-à-dire à une diminution de cette pression. Un tel déplacement peut avoir pour conséquence de libérer l'embout mâle sans intervention d'un opérateur, ce qui peut résulter dans une décharge violente et un "coup de fouet" potentiellement dangereux.

C'est à ces inconvénients qu'entend plus particulièrement remédier l'invention en proposant un raccord rapide de sécurité dans lequel l'embout mâle ne risque pas de passer automatiquement, c'est-à-dire sans intervention de l'opérateur, de sa position de verrouillage dans l'élément femelle à une position de déconnexion complète, sans retenue dans sa position de décharge de la canalisation aval.

Dans cet esprit, l'invention concerne un raccord rapide du type précité, qui comprend une butée formée par une bague disposée autour du corps de l'élément femelle dans le volume intérieur du fourreau et apte à coopérer avec un talon interne du fourreau dans la position intermédiaire précitée, afin de limiter le mouvement du fourreau, sous l'effet de la pression régnant dans son volume intérieur du fait de la décharge de la canalisation dans la position intermédiaire, vers une position de libération de l'embout par l'organe de retenue.

Grâce à ces moyens de limitation du mouvement du fourreau, celui-ci ne peut pas être déplacé vers une position de libération, prématurée et automatique, de l'embout mâle car la butée formée par la bague l'en empêche efficacement.

D'autres caractéristiques avantageuses de l'invention ressortent des revendications subsidiaires ci-jointes.

Selon un aspect avantageux de l'invention, des orifices d'évent ménagés dans le corps de l'élément femelle permettent l'écoulement du fluide issu de la canalisation aval, du volume intérieur du fourreau vers l'extérieur du raccord. Grâce à ces évents, on évite une élévation de pression trop importante à l'intérieur du fourreau, notamment dans une chambre annulaire définie autour du corps de l'élément femelle. Une telle pression n'est donc pas susceptible d'induire un déplacement intempestif du fourreau. Les orifices d'évent ont avantageusement une section totale permettant l'écoulement du fluide issu de cette canalisation aval sans élévation sensible de 1a pression dans le volume intérieur du fourreau.

Selon un aspect avantageux, la bague est chargée élastiquement en direction d'une surface de portée externe du corps et en direction du talon du fourreau. Dans ce cas, les moyens de charge élastique de la bague peuvent être formés par des moyens de rappel élastique du fourreau en position de prise du mécanisme de verrouillage et/ou de l'organe de retenue.

Selon un autre aspect avantageux de l'invention, le jeu entre le corps de l'élément femelle et le fourreau, en aval de la butée dans le sens d'écoulement du fluide, dans la position intermédiaire de l'embout, est supérieur au jeu entre cette butée et ce corps et/ou au jeu entre cette butée et ce fourreau. Cet aspect de l'invention garantit que la pression en aval de la butée est en permanence inférieure à la pression en amont de cette butée, de sorte que la butée est en permanence soumise à une différence de pression qui tend à la plaquer vers la surface de portée définie sur le corps et vers le talon du fourreau.

Les dispositifs connus comprennent des moyens de verrouillage en position de transfert et des moyens de retenue en position intermédiaire aptes à coopérer avec une géométrie particulière d'embout, notamment dans le cas de l'utilisation de griffes élastiques. Or, les embouts susceptibles d'être utilisés avec les éléments femelle peuvent avoir plusieurs origines et des géométries variables, de sorte que les moyens de verrouillage et/ou les organes de manoeuvre ne sont pas toujours pleinement efficaces. Pour pallier cet inconvénient, l'organe de retenue est formé par une bille susceptible de mouvements axiaux et radiaux dans une lumière oblongue formée dans le corps. Par ailleurs, le mécanisme de verrouillage peut comprendre des aiguilles mobiles dans des lumières oblongues formées dans le corps selon des directions inclinées par rapport à la direction d'introduction et d'extraction de l'embout mâle dans l'élément femelle.

L'invention sera mieux comprise et d'autres avantages de celle-ci apparaîtront plus clairement à la lumière de la description qui va suivre d'un mode de réalisation d'un raccord rapide de sécurité conforme à son principe, donnée uniquement à titre d'exemple et faite en référence aux dessins annexés dans lesquels :
- la figure 1 est une coupe axiale montrant l'agencement général de deux éléments mâle et femelle d'un raccord conforme à l'invention en position accouplée ;
- la figure 2 est une coupe transversale selon la ligne II-II à la figure 1, on y a indiqué en I-I le plan de coupe de la figure 1 ;
- la figure 3 est une coupe axiale selon la ligne III-III à la figure 1 ; on y a indiqué en I-I le plan de coupe de la figure 1 ;
- la figure 4 montre, en perspective éclatée, certains éléments constitutifs du raccord des figures 1 à 3 ;
- la figure 5 est une coupe analogue à la figure 1 lorsque l'embout mâle est mis dans une position intermédiaire de décharge ou de vidange ;
- la figure 6 est une coupe selon la ligne VI-VI à la figure 5 ; on y a indiqué en V-V le plan de coupe de la figure 5 ;
- la figure 7 est une coupe analogue à la figure 5 lorsque l'embout mâle a atteint sa position de décharge ou de vidange ;
- la figure 8 est une coupe selon la ligne VIII-VIII à la figure 7 ; on y a indiqué en VII-VII le plan de coupe de la figure 7 ;
- la figure 9 est une vue analogue à la figure 7 lors du désaccouplement de l'embout mâle par rapport à l'élément femelle du raccord et
- la figure 10 est une coupe selon la ligne X-X à la figure 9 ; on y a indiqué en IX-IX le plan de coupe de la figure 9.

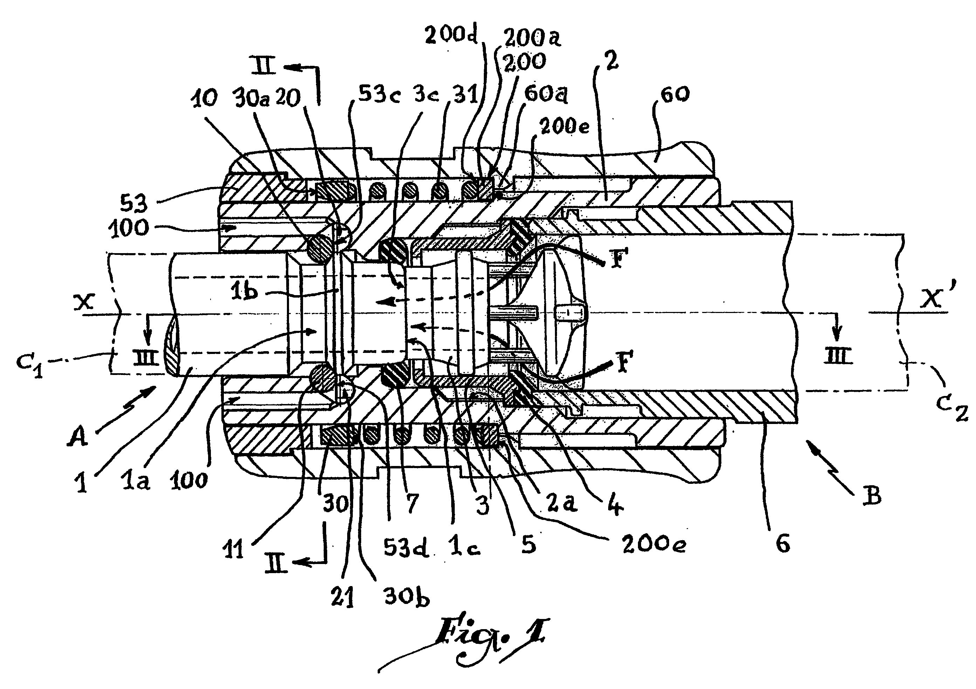

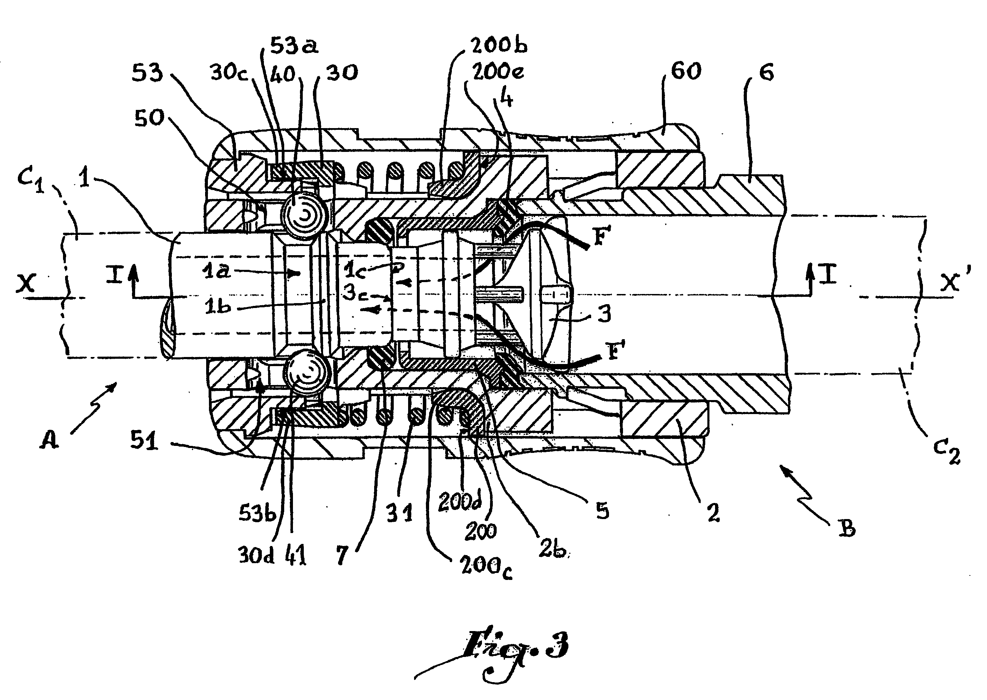

Le raccord rapide représenté sur les figures comprend un élément mâle A et un élément femelle B prévus l'un et l'autre sous forme tubulaire. L'élément mâle A est formé d'un embout 1 dont la partie arrière non représentée est raccordée fluidiquement à une première canalisation C₁. De même, la partie arrière de l'élément femelle B est reliée à une seconde canalisation C₂, elle-même raccordée à une source d'air comprimé non représentée. L'élément femelle B est formé d'un corps tubulaire 2 à l'intérieur duquel est logé à coulissement un clapet 3 apte à venir en appui contre un siège 4, formé par une bague en élastomère immobilisée entre un manchon interne 5 et un manchon externe 6 sur lequel est raccordée la canalisation C₂, les manchons 5 et 6 étant disposés à l'intérieur d'un alésage central 2a du corps 2. Un joint torique 7 est également prévu dans cet alésage central pour venir en appui contre la surface radiale externe de l'embout 1 en position accouplée du raccord, comme représenté aux figures 1 et 3.

Deux aiguilles 10 et 11 sont prévues pour verrouiller l'embout 1 à l'intérieur du corps 2 dans la position des figures 1 et 3. Ces aiguilles sont reçues dans une gorge périphérique externe 1a de l'embout 1, bordée par une collerette périphérique externe 1b. Les aiguilles 10 et 11 sont mobiles à l'intérieur de lumières oblongues 20 et 21, ménagées dans le corps 2 et inclinées par rapport à l'axe central X-X' des éléments mâle et femelle A et B qui définit la direction d'introduction et d'extraction de l'embout mâle A dans l'élément femelle B.

Lors de l'introduction de l'embout 1 dans le corps 2, la collerette 1b repousse les aiguilles 10 et 11 à l'intérieur des lumières 20 et 21 jusqu'à l'appui de la face avant 1c de l'embout 1 contre la face correspondante 3c du clapet 3. Du fait de la suite du mouvement d'introduction de l'embout 1, le clapet est décollé de son siège 4, ce qui permet l'écoulement de l'air traversant le raccord, de la canalisation amont C₂ vers la canalisation aval C₁, comme représenté par les flèches F aux figures 1 et 3.

Un anneau de verrouillage 30 est disposé autour du corps 2 et conformé pour que les extrémités des aiguilles 10 et 11 soient en appui simple contre une face 30a de l'anneau 30 tournée vers le débouché de l'alésage 2a du corps 2, c'est-à-dire en direction de la canalisation C₁, dans la position des figures 1 et 3. Par sa face 30b opposée à la face 30a, l'anneau de verrouillage 30 est en appui contre un ressort de compression 31 qui tend à le repousser vers le débouché de l'alésage 2a.

Ainsi, lors de l'introduction de l'embout 1 dans le corps 2, les aiguilles 10 et 11 sont, dans un premier temps, repoussées à l'intérieur des logements 20 et 21, de telle sorte qu'elles déplacent l'anneau 30 en direction du clapet 3, à l'encontre de la force du ressort 31. Dès que la collerette 1b a dépassé les aiguilles 10 et 11, l'effort de rappel élastique dû au ressort 31 repousse l'anneau 30 vers le débouché de l'alésage 2a, de telle sorte que les aiguilles 10 et 11 sont repoussées également dans cette direction et que, compte tenu du caractère incliné des lumières 20 et 21, les aiguilles 10 et 11 sont déplacées en direction de la gorge 1a de l'embout 1. L'embout 1 est ainsi verrouillé dans le corps 2 dans la position des figures 1 et 3.

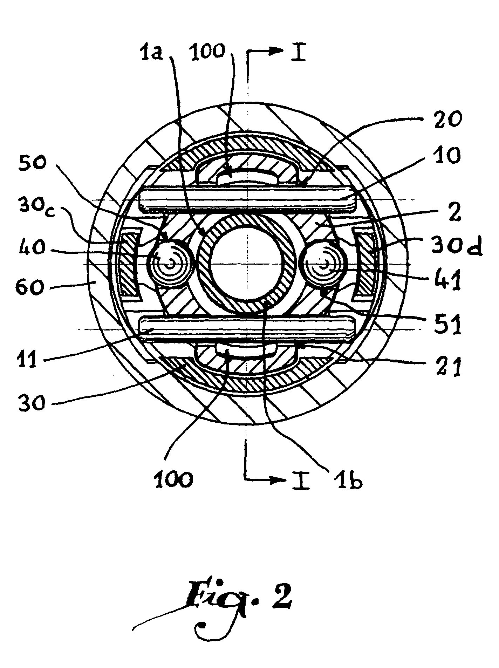

Des billes 40 et 41 sont logées dans deux lumières oblongues 50 et 51 ménagées dans le corps 2, parallèlement à l'axe X-X'. Dans la position des figures 1 à 3, les billes 40 et 41 sont maintenues engagées dans la gorge 1a grâce à deux parties d'appui 53a et 53b formées sur une bague de verrouillage 53 dont la fonction est détaillée dans ce qui suit. Au niveau des billes 40 et 41, c'est-à-dire dans le plan de coupe de la figure 3, l'anneau 30 se prolonge par deux languettes 30c et 30d qui viennent en recouvrement des parties d'appui 53a et 53b, de telle sorte qu'un mouvement des billes 40 et 41 selon une direction radiale dirigée vers l'extérieur est empêché, les billes 40 et 41 étant ainsi fermement maintenues en position dans la gorge 1a.

Un fourreau 60 est disposé autour du corps 2 en étant susceptible de mouvements de translation autour de ce corps, parallèlement à l'axe X-X'.

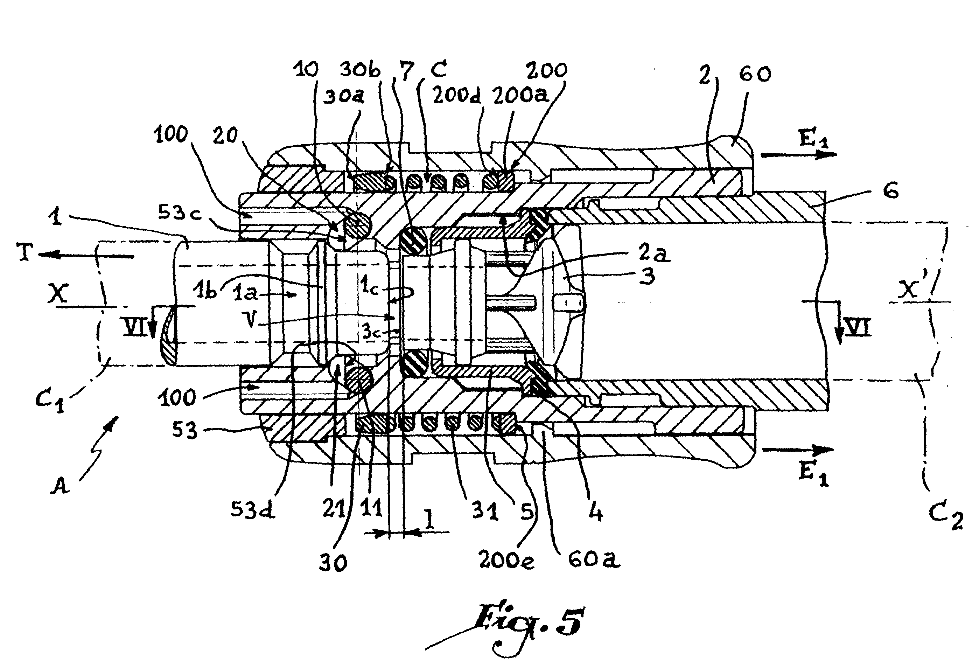

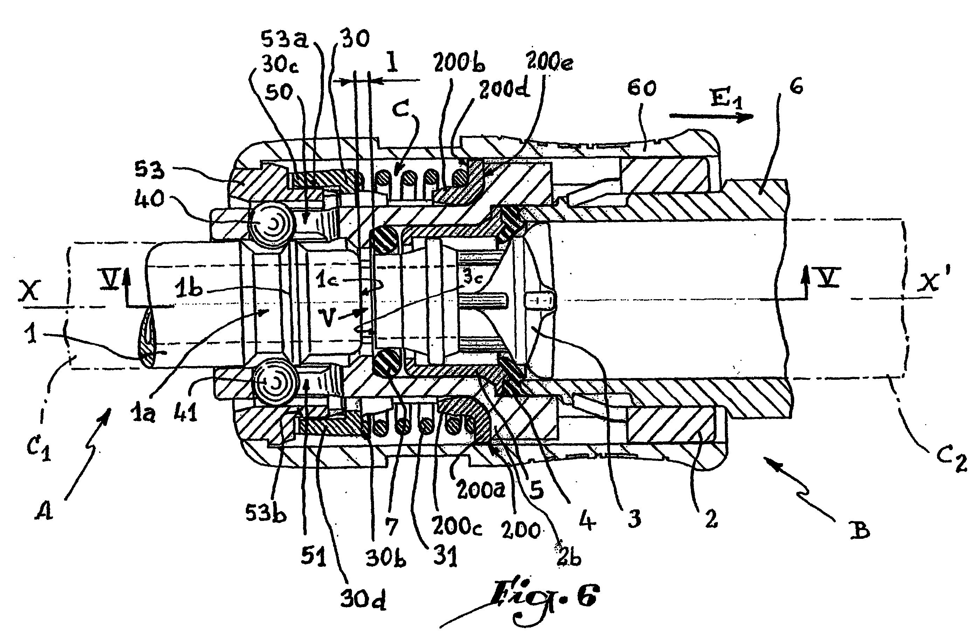

Lorsqu'il est nécessaire d'ouvrir le raccord, c'est-à-dire de séparer les éléments mâle et femelle A et B, on déverrouille l'embout 1 par rapport au corps 2 en exerçant sur le fourreau 60 un effort E₁ dirigé vers l'arrière de l'élément femelle B, c'est-à-dire vers la canalisation C₂, comme représenté aux figures 5 et 6. Le fourreau 60 est solidaire de la bague 53, de telle sorte que le déplacement du fourreau 60 vers la canalisation C₂ résulte dans un déplacement concomitant de la bague 53. Les parties d'appui 53a et 53b viennent recouvrir les billes 40 et 41 et empêcher tout mouvement radial de ces billes vers l'extérieur de la gorge 1a.

Des flancs 53c et 53d de la bague 53 sont en appui simple contre les aiguilles 10 et 11. Du fait du mouvement de la bague 53, les flancs repoussent les aiguilles en direction de la canalisation C₂, ce qui a également pour effet de repousser l'anneau 30 à l'encontre de la force du rappel du ressort 31 et ce, comme cela se produit lors de l'étape de verrouillage du raccord. Dans ces conditions, du fait de l'inclinaison des lumières 20 et 21 par rapport à l'axe X-X', les aiguilles 10 et 11 sont extraites de la gorge 1a de l'embout 1, de sorte que l'embout 1 peut être chassé ou tiré vers l'extérieur de l'alésage 2a, comme représenté par la flèche T aux figures 5 et 6.

La face avant 1c de l'embout 1 n'est alors plus en appui contre la face 3c du clapet 3. Le clapet 3 est donc plaqué contre le siège 4 sous l'effet des forces de pression régnant dans le manchon externe 6.

Dans la position des figures 5 et 6, l'embout 1 est retenu à l'intérieur du corps 2 par les billes 40 et 41 qui sont maintenues dans la gorge 1a, comme représenté à la figure 6.

Par le passage de la position des figures 1 à 3 à celle des figures 5 et 6, l'embout 1 est parvenu dans une position de décompression ou de vidange de l'air compris dans la canalisation C₁ puisque la face avant 1c de l'embout 1 est séparée du clapet 3 par un volume intérieur V dont la largeur 1, définie entre les faces 1c et 3c, est non nulle.

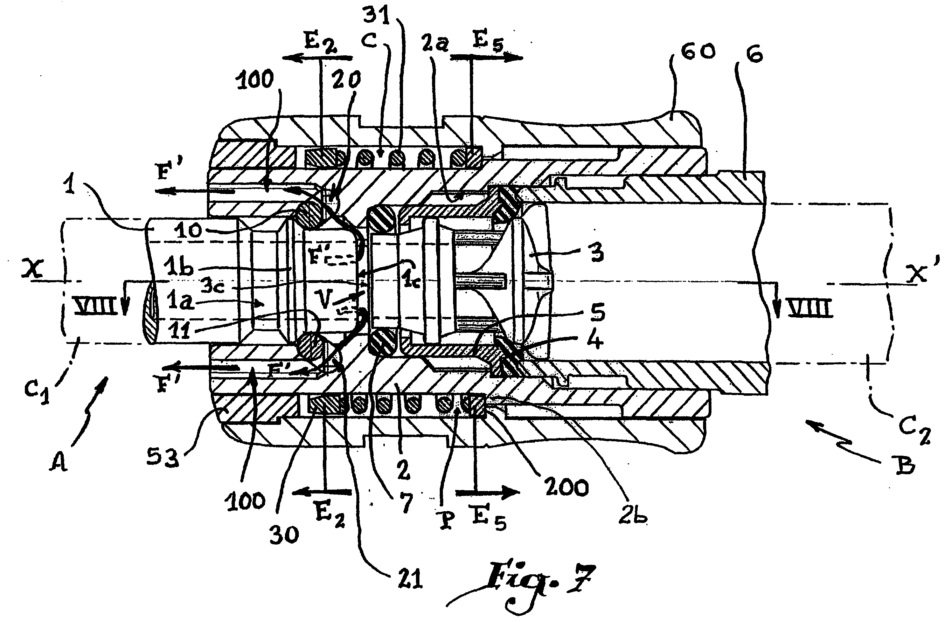

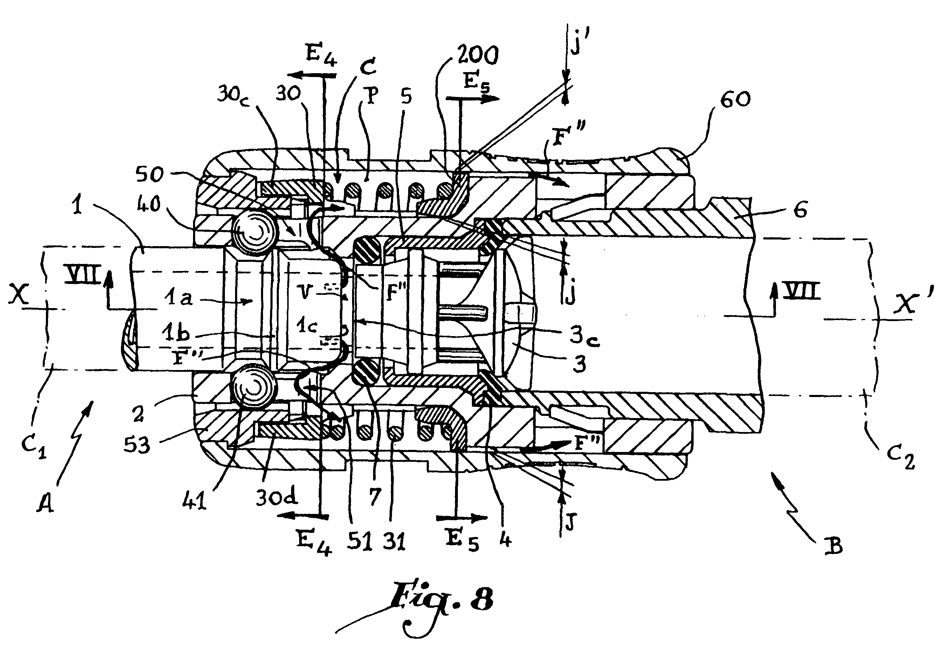

Lorsque l'opérateur relâche le fourreau 60, celui-ci est repoussé vers le débouché de l'alésage 2a. En effet, le ressort 31 exerce sur l'anneau 30 un effort E₂ dirigé vers la canalisation C₁ comme représenté aux figures 7 et 8. Les aiguilles 10 et 11, qui sont en appui contre l'anneau 30, sont repoussées vers le débouché de l'alésage et prennent une position d'appui contre la collerette 1b représentée à la figure 7. Dans cette position, les aiguilles 10 et 11 exercent sur les flancs 53c et 53d de la bague 53 un effort sensiblement analogue à l'effort E₂, ce qui a pour effet de repousser également cette bague 53 et le fourreau 60 qui en est solidaire en direction de la canalisation C₁. On est alors dans la position des figures 7 et 8 dans laquelle les billes 40 et 41 sont maintenues en position dans la gorge 1a, comme représenté à la figure 8.

Dans les positions des figures 5 à 8, l'air se trouvant dans la canalisation C₁ peut s'écouler à partir de l'embout 1 dans le volume V, ce qui permet de purger la canalisation C₁ et d'éviter ultérieurement tout risque de coup de fouet lors de la séparation effective des éléments mâle et femelle A et B.

A partir du volume V, l'air remplit les interstices internes de l'élément femelle B et, notamment, une chambre annulaire C définie dans le volume intérieur du fourreau 60 autour du corps 2. Du côté de la canalisation C₁, la chambre annulaire C est obturée par la bague 53. Du fait de l'écoulement de l'air sous pression du volume V vers la chambre C, la pression P dans la chambre annulaire C tend à augmenter.

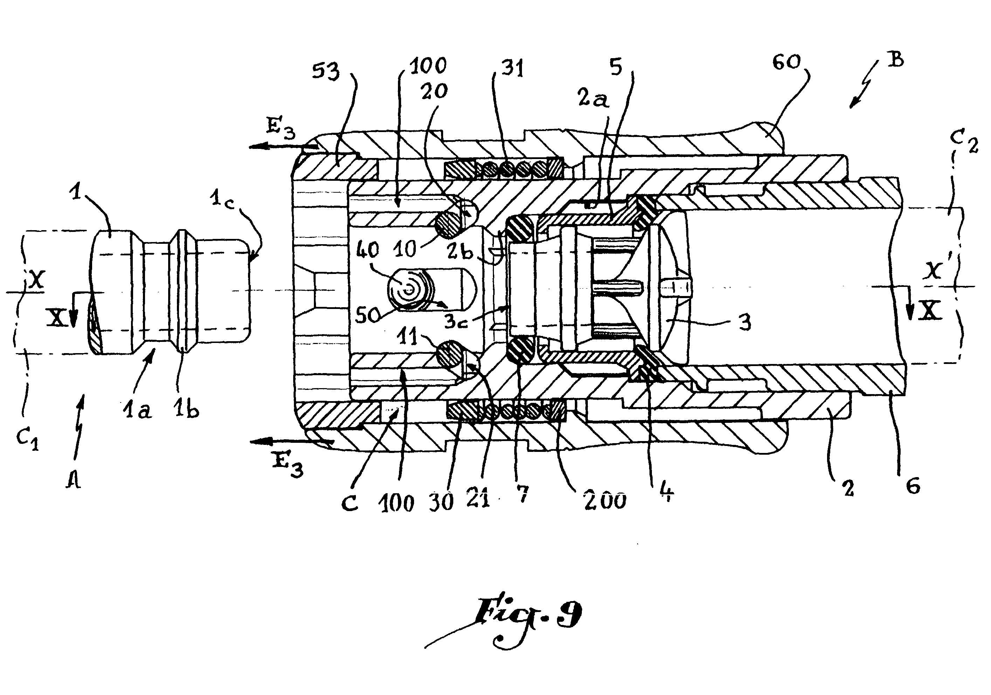

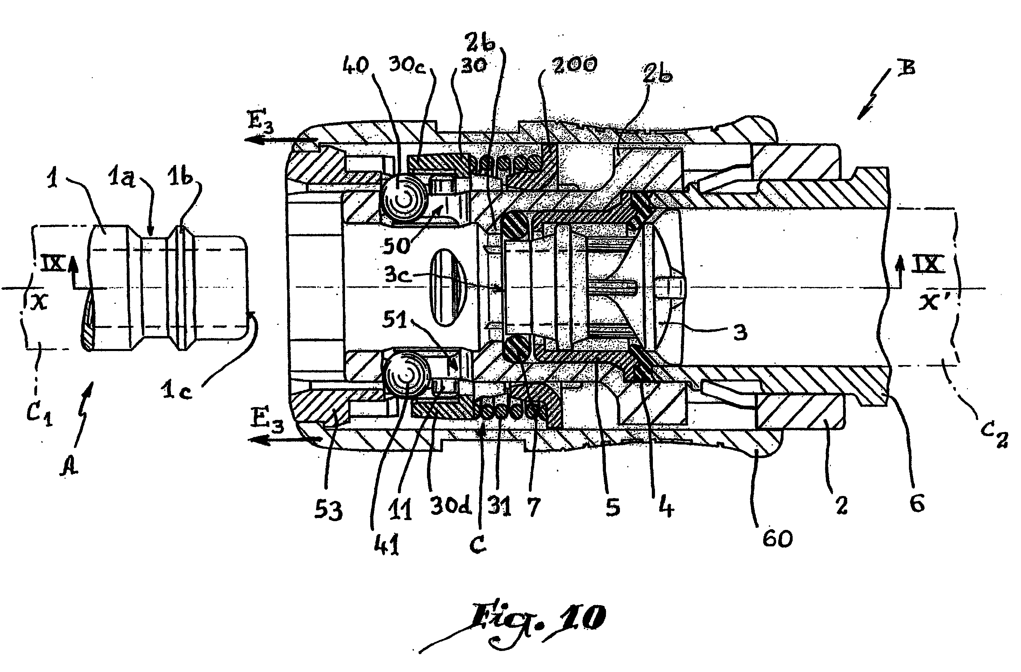

Lorsqu'on souhaite poursuivre le désaccouplement des éléments mâle et femelle A et B, il suffit d'exercer sur le fourreau 60 un effort E₃ tel que représenté aux figures 9 et 10, en sens inverse de l'effort E₁, ce qui a pour effet de déplacer la bague 53 en direction de la canalisation C₁ au-delà du débouché de l'alésage central 2a du corps 2. Les parties d'appui 53a et 53b ne s'opposent alors plus à l'extraction des billes 40 et 41 à l'extérieur de la gorge 1a de l'embout 1. Lorsque les billes 10 et 11 sont extraites de la gorge 1a et puisque les aiguilles 40 et 41 sont déjà en amont de la collerette 1b, rien ne s'oppose à l'extraction de l'embout 1 par rapport au corps 2, ce qui peut alors être fait comme représenté aux figures 9 et 10.

Lors de l'introduction de l'élément mâle A dans l'élément femelle B, la face avant inclinée de la collerette 1b repousse les billes 40 et 41 vers l'amont. Les billes prisonnières de leurs lumières 50 et 51 viennent en butée dans ces lumières et poussent le corps 2 à l'intérieur du manchon 60 tenu en main par un opérateur. On atteint alors la position des figures 9 et 10. Dans cette position, les billes 40 et 41 peuvent être chassées radialement vers l'extérieur des lumières 50 et 51 par la collerette 1b de l'embout 1 en cours d'introduction dans l'alésage 2a du corps 2. En effet, la bague 53 et l'anneau 30 ne sont pas en recouvrement au niveau des parties 53a, 53b, et 30c. Ainsi, en tenant compte du fonctionnement des aiguilles 10 et 11 décrit en référence aux figures 1 à 3, on comprend que la connexion entre les éléments mâle et femelle B est automatique, en ce sens qu'elle intervient par le seul mouvement d'introduction de l'embout mâle 1 dans le corps 2.

En revenant aux positions intermédiaires représentées aux figures 5 à 8, et correspondant à la décharge de la canalisation C₁, on comprend qu'il est indispensable que les billes 40 et 41 remplissent efficacement leur fonction de retenue de l'embout 1 à l'intérieur du corps 2 jusqu'à la décharge complète de la canalisation C₁ et ce, afin d'éviter toute séparation intempestive de la partie mâle A par rapport à la partie femelle B. Une telle séparation reviendrait en effet à nier la caractéristique de double détente du raccord considéré.

Du fait de l'augmentation de la pression P dans la chambre C, l'effort E₄ exercé en direction de la canalisation C₁ augmente au fur et à mesure de la décharge de l'air provenant de cette canalisation.

Si la pression P dans la chambre C devient trop importante, on doit veiller à ce que l'effort E₄ ne soit pas suffisant pour repousser la bague 53 et le fourreau 60 vers la position des figures 9 et 10 dans laquelle les billes 40 et 41 peuvent être éjectées de la gorge 1a, alors que l'opérateur n'a exercé sur le fourreau 60 aucun effort équivalent à l'effort E₃ représenté aux figures 9 et 10.

Pour supprimer ce danger d'ouverture intempestive du raccord, et conformément à l'invention, on prévoit de limiter le mouvement du fourreau 60 et de la bague 53 en direction de la canalisation C₁ dans la position des figures 5 à 8.

Pour ce faire, des évents 100 sont prévus dans le corps 2, de telle sorte que l'air s'écoulant à partir de l'embout dans le volume V peut suivre le trajet représenté par la flèche F' à la figure 7. On évite ainsi une élévation de pression potentiellement dangereuse dans la chambre C.

Selon un mode de réalisation non représenté de l'invention, on peut également prévoir que la surface interne de la bague 53 présente des nervures longitudinales qui définissent des canaux avec la surface externe du corps 2, ces canaux permettant de mettre en communication la chambre C et l'atmosphère extérieure. Ces canaux constituent donc également des évents de mise en communication du volume intérieur du fourreau 60 et de l'extérieur du raccord.

Dans tous les cas, la section totale des évents est prévue suffisante pour permettre l'écoulement du fluide issu de la canalisation C₁ sans élévation sensible de la pression P dans la chambre C, de telle sorte que tout risque de mouvement intempestif de la bague 53 peut être écarté.

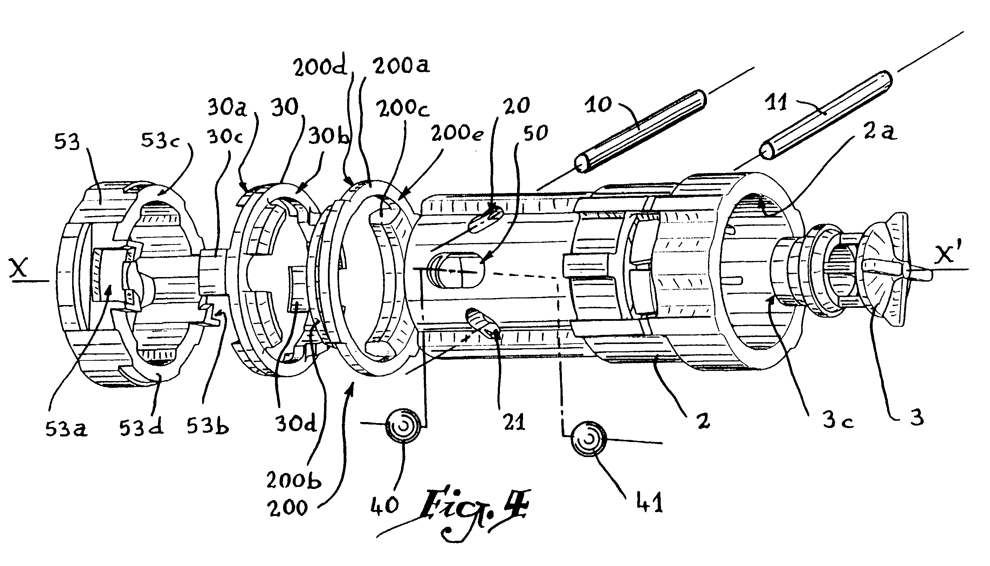

Par ailleurs, une bague de sécurité 200 est logée dans la chambre C, c'est-à-dire entre le corps 2 et le fourreau 60, en appui contre un épaulement 2b du corps 2. La bague 200 est plus particulièrement visible à la figure 4. Elle comprend une partie annulaire 200a et deux secteurs 200b et 200c présentant, en combinaison avec la partie annulaire 200a, une section transversale en forme de C telle que représentée aux figures 3, 6, 8 et 10. La face 200d de la bague 200 tournée vers la canalisation C₁ est en appui simple contre le ressort 31, de telle sorte que la bague 200 est chargée élastiquement en direction de l'épaulement 2b du corps 2.

Par ailleurs, le fourreau 60 porte plusieurs talons internes 60a, dont deux sont visibles aux figures 1, 5, 7 et 9 et qui sont prévus pour coopérer avec la face 200e de la bague 200 tournée vers la canalisation C₂.

En cas d'élévation de pression dans la chambre C, l'effort E₄ aurait tendance à déplacer la bague 53 en direction de la canalisation C₁, ce qui aurait pour effet d'entraîner également le fourreau 60 qui est solidaire de la bague 53. Un tel mouvement du fourreau 60 en direction de la canalisation C₁ impliquerait, du fait de l'appui des talons 60a sur la face 200e de la bague 200, un déplacement de cette bague à l'encontre de l'effort E₅ généré par le ressort 31 et la pression régnant dans la chambre C. En d'autres termes, les efforts antagonistes E₄ et E₅ qui s'exercent respectivement sur les bagues 53 et 200, comme représenté à la figure 8, sont dus principalement à la pression P, ce qui permet d'éviter un déséquilibre qui pourrait conduire à un déplacement de la bague 53 et du fourreau 60. Ainsi, indépendamment de la valeur de la pression P, on obtient une situation d'équilibre stable dans la configuration des figures 5 à 8. L'échappement de l'air présent dans la canalisation C₁ peut donc avoir lieu en toute sécurité, à travers les évents 100 ou équivalents, sans risque d'automouvement du fourreau 60.

Pour améliorer encore la fiabilité du raccord, on prévoit que le jeu J entre le fourreau 60 et le corps 2 en aval de la bague 200 est supérieur au jeu j entre la bague 200 et le corps 2 et au jeu j' entre la bague 200 et le fourreau 60. L'air présent dans la chambre C peut ainsi s'écouler dans l'espace annulaire défini par le jeu J, comme représenté par la flèche F'' aux figures 7 et 8.

Ainsi, la pression régnant en aval de la bague de sécurité 200 est en permanence inférieure à la pression P régnant dans la chambre C, pour autant que cette pression est différente de la pression atmosphérique. Ceci permet d'utiliser pleinement la force due à la pression P régnant dans la chambre C pour charger la bague 200 en direction de l'épaulement 2b, sans risque de positionnement instable de la bague 200 à l'intérieur de la chambre C et ce, même dans une variante où le ressort 31 ne coopèrerait pas avec la bague 200.

Les évents 100 d'une part et la bague de sécurité 200 d'autre part peuvent être prévus indépendamment dans le raccord de l'invention ou en combinaison, comme représenté sur les figures. En d'autres termes, la bague 200 pourrait être omise pour autant que des évents suffisants seraient prévus, de même que les évents pourraient être supprimés alors que seule une bague de sécurité serait prévue. La bague de sécurité présente l'avantage supplémentaire de ne pas être accessible de l'extérieur, de sorte que son fonctionnement n'est jamais altéré. En particulier, lors d'un fonctionnement du raccord dans un environnement sale, il se pourrait que des déchets viennent à encombrer les évents 100, voire à les boucher, ce qui les rendrait inefficaces. La bague 200 fonctionne de façon totalement satisfaisante, y compris dans un environnement sale.

Il convient de noter également que la bague 200 est efficace quelle que soit la pression P qui dépend de la pression du fluide transitant dans le raccord, puisque l'effort exercé sur la bague 200 pour résister au déplacement du fourreau 60 augmente avec cette pression.

La bague 200 constitue en fait une butée de déplacement du fourreau 60 et de la bague 5. Dans l'exemple représenté, elle est constituée par une bague, mais il est bien entendu qu'elle pourrait également être formée d'éléments discrets répartis autour du corps 2 dans le volume intérieur du fourreau 60.

L'invention a été représentée avec un moyen de verrouillage formé par des aiguilles et des organes de retenue formés par des billes, ce qui permet à l'élément femelle B de s'adapter à des embouts 1 de l'élément mâle A de géométrie variable. Cependant, d'autres moyens de verrouillage et organes de retenue peuvent être envisagés, notamment des griffes, éventuellement montées sur une bague annulaire. De telles griffes peuvent, au choix, remplacer les aiguilles, les billes où les deux à la fois. L'invention est également applicable, avec des organes de retenue formés par des leviers articulés dans la partie femelle et pourvus chacun d'un nez ou bec apte à pénétrer dans une gorge périphérique externe de l'embout mâle. La géométrie du nez ou bec de ces leviers peut être adaptée à celle de la gorge de l'embout, d'où une grande adaptabilité de l'élément femelle par rapport aux différents types d'embouts du marché.

L'invention a été décrite avec un raccord alimenté en air. Elle est cependant applicable quel que soit le fluide, gazeux ou liquide transitant dans les canalisations.

## Revendications

1. Raccord rapide de sécurité pour la jonction amovible de canalisations (C₁, C₂) du genre comprenant un embout mâle (A) et un élément femelle (B) propres à s'emmancher et à se verrouiller l'un à l'intérieur de l'autre, un mécanisme de verrouillage commandé (10, 11) étant apte à immobiliser axialement ledit embout mâle (1) dans une position de raccordement, alors qu'au moins un organe de retenue (40, 41) est prévu pour immobiliser ledit embout mâle, après libération dudit embout par ledit mécanisme de verrouillage, dans une position intermédiaire de décharge de la canalisation (C₁) reliée audit embout mâle, lesdits mécanismes de verrouillage et organe de retenue étant commandés par un fourreau (60) coulissant autour d'un corps (2) de l'élément femelle, **caractérisé en ce qu'**il comprend une butée formée par une bague (200) disposée autour dudit corps dans le volume intérieur (C) dudit fourreau (60) et apte à coopérer avec un talon interne (60a) dudit fourreau dans ladite position intermédiaire pour limiter le mouvement dudit fourreau, sous l'effet de la pression (P) régnant dans son volume intérieur (V, C) du fait de la décharge de ladite canalisation dans ladite position intermédiaire, vers une position de libération dudit embout (1) par ledit organe de retenue (40, 41).

2. Raccord rapide selon la revendication 1, **caractérisé en ce que** ladite bague (200) est directement soumise, par l'une (200d) de ses faces latérales, à un effort (E₅) exercé par un ressort (31) et par la pression (P) régnant dans ledit volume intérieur (V, C).

3. Raccord rapide selon la revendication 2, **caractérisé en ce que** ladite bague (200) est chargée élastiquement (31) en direction d'une surface de portée (2b) externe dudit corps (2) et en direction dudit talon (60a).

4. Raccord rapide selon la revendication 3, **caractérisé en ce que** les moyens de charge élastique de ladite bague (200) sont formés par des moyens (31) de rappel élastique en position de prise dudit mécanisme de verrouillage (10, 11) et/ou dudit organe de retenue (40, 41).

5. Raccord rapide selon l'une des revendications précédentes, **caractérisé en ce que** la pression (P) régnant dans ledit volume intérieur (C) exerce, sur un élément (53) solidaire dudit fourreau (60), un effort (E₄) antagoniste à un effort (E₅) exercé sur ladite bague (200) par des moyens (31) de rappel élastique et ladite pression, lesdits efforts (E₄-E₅) évitant un déséquilibre susceptible de conduire à un déplacement du fourreau.

6. Raccord rapide selon l'une des revendications précédentes, **caractérisé en ce qu'**il comprend des orifices d'évent (100) ménagés dans ledit corps (2) et permettant l'écoulement (F') du fluide, issu de ladite canalisation (C₁), du volume intérieur (V, C) dudit fourreau (60) vers l'extérieur dudit raccord (A, B).

7. Raccord rapide selon la revendication 6, **caractérisé en ce que** lesdits orifices d'évent (100) ont une section totale permettant l'écoulement (F') du fluide issu de ladite canalisation (C₁) sans élévation sensible de la pression (P) dans le volume intérieur (V, C) dudit fourreau (60).

8. Raccord rapide selon l'une des revendications précédentes, **caractérisé en ce que** le jeu (J) entre ledit corps (2) et ledit fourreau (60), en aval de ladite butée (200), dans le sens d'écoulement (F'') dudit fluide, dans ladite position intermédiaire, est supérieur au jeu (j) entre ladite butée (200) et ledit corps (2) et/ou au jeu (j') entre ladite butée (200) et ledit fourreau (60).

9. Raccord rapide selon l'une des revendications précédentes, **caractérisé en ce que** ledit organe de retenue est formé par une bille (40, 41) susceptible de mouvements axiaux et radiaux dans une lumière oblongue (50, 51) formée dans ledit corps (2) parallèlement à la direction (X-X') d'introduction et d'extraction dudit embout mâle (A) dans l'élément femelle (B).

10. Raccord rapide selon l'une des revendications précédentes, **caractérisé en ce que** ledit mécanisme de verrouillage comprend des aiguilles (10, 11) mobiles dans des lumières oblongues (20, 21) formées dans ledit corps selon des directions inclinées par rapport à la direction (X-X') d'introduction et d'extraction dudit embout mâle (A) dans l'élément femelle (B).

## Patentansprüche

1. Sicherheitsschnellverbindung für die lösbare Verbindung von Rohrleitungen (C₁, C₂) mit einem Einsteckelement (A) und einem aufnehmenden Element (B), die geeignet sind, ineinander gesteckt zu werden und sich zu verriegeln, einem gesteuerten Verriegelungsmechanismus (10, 11), der axial das Einsteckelement (1) in einer Anschlußposition festlegt, während mindestens ein Halteorgan (40, 41) vorgesehen ist, um das Einsteckelement nach seiner Freigabe durch den Verriegelungsmechanismus in einer Zwischenstellung zur Entleerung der mit der Einsteckmuffe verbundenen Rohrleitung (C₁) festzulegen, wobei der Verriegelungsmechanismus und das Halteorgan durch eine Hülse (60) gesteuert werden, die um einen Körper (2) des aufnehmenden Elementes gleitet,
**dadurch gekennzeichnet,**
**daß** sie einen durch einen um den Körper in dem Innenvolumen (C) der Hülse (60) herum angeordneten Ring (200) gebildeten Anschlag umfaßt, der mit einer Innenschulter (60a) der Hülse in der Zwischenposition zusammenarbeitet, um die Bewegung der Hülse unter der Wirkung des Drucks (P), der in ihrem Innenvolumen (V, C) aufgrund der Entleerung der Rohrleitung in der Zwischenposition herrscht, in eine Freigabeposition des Einsteckelementes (1) durch das Halteorgan (40, 41) zu begrenzen.

2. Schnellverbindung nach Anspruch 1, **dadurch gekennzeichnet, daß** der Ring (200) durch eine (200d) seiner Seitenflächen direkt seiner Kraft (E₅) unterworfen wird, die durch eine Feder (31) und durch den in dem Innenvolumen (V, C) herrschenden Druck (P) ausgeübt wird.

3. Schnellverbindung nach Anspruch 2, **dadurch gekennzeichnet, daß** der Ring (200) elastisch (31) in Richtung einer äußeren Stützfläche (2b) des Körpers (2) und in Richtung der Schulter (60a) vorgespannt ist.

4. Schnellverbindung nach Anspruch 3, **dadurch gekennzeichnet, daß** die elastischen Vorspannmittel des Ringes (200) aus elastischen Rückstellmitteln (31) in der Aufnahmeposition des Verriegelungsmechanismus (10, 11) und/oder des Halteorgans (40, 41) gebildet werden.

5. Schnellverbindung nach einem der vorhergehenden Ansprüche, **dadurch gekennzeichnet, daß** der in dem Innenvolumen (C) herrschende Druck (P) auf ein fest mit der Hülse (60) verbundenes Element (53) eine zu einer auf den Ring (200) durch die elastischen Rückstellmittel (31) und den Druck ausübende Kraft (E₅) gegenwirkende Kraft (E₄) ausübt, wobei die Kräfte (E₄-E₅) ein Ungleichgewicht vermeiden, das zu einer Verschiebung der Hülse führen könnte.

6. Schnellverbindung nach einem der vorhergehenden Ansprüche, **dadurch gekennzeichnet, daß** sie in den Körper (2) eingearbeitete Lüftungsöffnungen (100) umfaßt, die das Ausströmen (F') des aus der Rohrleitung (C₁) austretenden Fluids aus dem Innenvolumen (V, C) der Hülse (60) nach außen bezüglich der Verbindung (A, B) gestatten.

7. Schnellverbindung nach Anspruch 6, **dadurch gekennzeichnet, daß** die Lüftungsöffnungen (100) von einem solchen Gesamtquerschnitt sind, daß das Ausströmen (F') des aus der Rohrleitung (C₁) austretenden Fluids ohne merkbare Erhöhung des Drucks (P) in dem Innenvolumen (V, C) der Hülse (60) ermöglicht wird.

8. Schnellverbindung nach einem.der vorhergehenden Ansprüche, **dadurch gekennzeichnet, daß** das Spiel (J) zwischen dem Körper (2) und der Hülse (60) stromabwärts zu dem Anschlag (200) in Strömungsrichtung (F'') des Fluids in der Zwischenstellung größer ist als das Spiel (j) zwischen dem Anschlag (200) und dem Körper (2) und/oder dem Spiel (j') zwischen dem Anschlag (200) und der Hülse (60).

9. Schnellverbindung nach einem der vorhergehenden Ansprüche, **dadurch gekennzeichnet, daß** das Halteorgan durch eine Kugel (40, 41) gebildet wird, die für axiale und radiale Bewegungen in einem in dem Körper (2) parallel zu der Einführ- und Ausziehrichtung (X-X') des Einsteckelementes (A) in dem aufnehmenden Element (B) gebildeten Langloch (50, 51) geeignet ist.

10. Schnellverbindung nach einem der vorhergehenden Ansprüche, **dadurch gekennzeichnet, daß** der Verriegelungsmechanismus Nadeln (10, 11) umfaßt, die in in dem Körper entsprechend geneigter Richtungen in Bezug auf die Einführ- und Ausziehrichtung (X-X') des Einsteckelementes (A) in dem aufnehmenden Element (B) gebildeten Langlöchern (20, 21) beweglich sind.

## Claims

1. A quick-acting safety coupling for the disconnectable joining of pipes (C₁, C₂), of the type comprising a male end piece (A) and a female element (B) suitable for fitting and locking one in the other, a controlled locking mechanism (10, 11) being able to immobilise said male end piece (1) axially in a connection position, while at least one retaining element (40, 41) is provided to immobilise said male end piece, after the releasing of said end piece by said locking mechanism, in an intermediate position for unloading the pipe (C₁) connected to said male end piece, said locking mechanisms and retaining element being controlled by a sleeve (60) which slides around a body (2) of the female element, **characterised in that** it comprises a stop formed by a ring (200) arranged around said body in the internal volume (C) of said sleeve (60) and able to cooperate with an internal bead (60a) of said sleeve in said intermediate position to restrict the movement of said sleeve, under the action of the pressure (P) in its internal volume (V, C) owing to the unloading of said pipe in said intermediate position, towards a position of release of said end piece (1) by said retaining element (40, 41).

2. A quick-acting coupling according to Claim 1, **characterised in that** said ring (200) is directly subjected, by one (200d) of its lateral faces, to a force (E₅) exerted by a spring (31) and by the pressure (P) in said internal volume (V, C).

3. A quick-acting coupling according to Claim 2, **characterised in that** said ring (200) is elastically loaded (31) in the direction of an external bearing surface (2b) of said body (2) and in the direction of said bead (60a).

4. A quick-acting coupling according to Claim 3, **characterised in that** the elastic loading means for said ring (200) are formed by means (31) for elastically returning into the engaged position of said locking mechanism (10, 11) and/or of said retaining element (40, 41).

5. A quick-acting coupling according to one of the preceding claims, **characterised in that** the pressure (P) in said internal volume (C) exerts, on an element (53) integral with said sleeve (60), a force (E₄) counter to a force (E₅) exerted on said ring (200) by elastic return means (31) and said pressure, said forces (E₄-E₅) avoiding an imbalance liable to result in displacement of the sleeve.

6. A quick-acting coupling according to one of the preceding claims, **characterised in that** it comprises vent orifices (100) formed in said body (2) and permitting the flow (F') of the fluid, coming from said pipe (C₁), from the internal volume (V, C) of said sleeve (60) towards the outside of said coupling (A, B).

7. A quick-acting coupling according to Claim 6, **characterised in that** said vent orifices (100) have a total section which permits the flow (F') of the fluid coming from said pipe (C₁) without significantly increasing the pressure (P) in the internal volume (V, C) of said sleeve (60).

8. A quick-acting coupling according to one of the preceding claims, **characterised in that** the play (J) between said body (2) and said sleeve (60), downstream of said stop (200), in the direction of flow (F") of said fluid, in said intermediate position, is greater than the play (j) between said stop (200) and said body (2) and/or than the play (j') between said stop (200) and said sleeve (60).

9. A quick-acting coupling according to one of the preceding claims, **characterised in that** said retaining element is formed by a ball (40, 41) capable of axial and radial movements in an oblong port (50, 51) formed in said body (2) parallel to the direction (X-X') of introduction and extraction of said male end piece (A) into/from the female element (B).

10. A quick-acting coupling according to one of the preceding claims, **characterised in that** said locking mechanism comprises needles (10, 11) which are mobile in oblong ports (20, 21) formed in said body in directions inclined relative to the direction (X-X') of introduction and extraction of said male end piece (A) into/from the female element (B).
